# EUROPÄISCHE PATENTANMELDUNG

(11) **EP 2 082 820 A2**
(43) Veröffentlichungstag der Anmeldung: **29.07.2009**
(21) Anmeldenummer: 09000900.2
(22) Anmeldetag: 23.01.2009
(51) Int. Cl.: B23B 27/04, B23B 27/08, B23B 29/04

(54) **Zerspanungswerkzeug**

(30) Priorität: 23.01.2008 DE 102008005788; 23.01.2008 DE 102008005789
(71) Anmelder: Präzisions-Drehteile Löcher GmbH, 73463 Westhausen (DE)
(72) Erfinder: Löcher, Anton, 73463 Westhausen (DE)
(74) Vertreter: Schmid, Wolfgang

(57) **Zusammenfassung**

Ein Zerspanungswerkzeug (1) weist wenigstens eine Schneidplatte (6) und wenigstens einen Schneidplattenhalter (3) auf, welcher wenigstens eine Ausnehmung (5) zur Aufnahme der Schneidplatte (6) aufweist. Jeweilige zur Anlage von Randabschnitten (13a,13b,13c) der Schneidplatte (6) vorgesehene Anlageflächen (24a,24b) der Ausnehmung (5) sind zumindest teilweise mit einer sich abwechselnde Erhebungen (16) und Vertiefungen (17) aufweisenden Verzahnung (15) versehen. Die Ausnehmung (5) weist eine Öffnung (5a) zum Einführen der Schneidplatte (6) in die Ausnehmung (5) auf. Der Schneidplattenhalter (3) weist einen von der Ausnehmung (5) beabstandeten, geschlossenen Schlitz (22) auf, welcher an derjenigen Seite der Ausnehmung (5) angeordnet ist, an der bei bestimmungsgemäßer Verwendung des Zerspanungswerkzeugs (1) die höchste Schnittkraft auftritt. Der Schlitz (22) erstreckt sich an der der Öffnung (5a) der Ausnehmung (5) entgegengesetzten Seite nicht über die Längserstreckung der Schneidplatte (6) hinaus. Ein sich zwischen der Ausnehmung (5) und dem Schlitz (22) befindlicher Steg (23) des Schneidplattenhalters (3) weist eine derartige Dicke auf, dass er elastisch verformbar ist. Die Schneidplatte (6) an ihrem dem Schlitz (22) zugewandten Randabschnitt (13c) weist eine Aussparung (20) auf, die sich an einer zu dem Schlitz (22) benachbarten Stelle befindet.

## Beschreibung

Die Erfindung betrifft ein Zerspanungswerkzeug mit wenigstens einer Schneidplatte und mit wenigstens einem Schneidplattenhalter nach der im Oberbegriff von Anspruch 1 näher definierten Art.

Des weiteren betrifft die Erfindung ein Zerspanungswerkzeug mit einem Grundhalter, an dem wenigstens ein Schneidplattenhalter angebracht ist, welcher wenigstens eine Ausnehmung zur Aufnahme einer Schneidplatte aufweist, nach der im Oberbegriff von Anspruch 9 näher definierten Art.

Ein gattungsgemäßes Zerspanungswerkzeug ist aus der EP 1 666 179 A2 bekannt. Zwar können mit dem dort beschriebenen Werkzeug insbesondere beim Ein- oder Abstechen von Werkstücken sehr gute Ergebnisse erzielt werden, insbesondere bei hohen Schnittkräften ist es jedoch möglich, dass es aufgrund der Verringerung des Materials des Schneidplattenhalters aufgrund des von der Ausnehmung beabstandeten, geschlossenen Schlitzes zu einem Bruch des Schneidplattenhalters kommt. Andererseits dient diese geschlossene Ausnehmung zum Erzeugen einer Vorspannung zum Halten der Schneidplatte und übernimmt somit eine wichtige Funktion innerhalb des Zerspanungswerkzeugs.

Aus der EP 0 059 602 A1 ist ein weiteres Zerspanungswerkzeug mit einem Schneidplattenhalter bekannt. Die Ausnehmung des Schneidplattenhalters weist dabei einen relativ großen Öffnungswinkel auf, wodurch die Schneidplatte nur einen unzureichenden Halt in der Ausnehmung besitzt und daher mittels einen dem Schneidplattenhalter zugeordneten Vorsprungs gehalten werden muss. Dieser Vorsprung wird durch Anbringen eines von der Ausnehmung ausgehenden Schlitzes in dem Schneidplattenhalter geschaffen. Diese Konstruktion ist zum Einen recht kompliziert und kann zum Anderen nicht die erforderliche Kraft zum Halten der Schneidplatte in der Ausnehmung aufbringen.

Die US 6,244,790 B1 beschreibt ein Zerspanungswerkzeug, bei dem die Aufnahme für die Schneidplatte mit einer Verzahnung versehen ist.

Ein weiteres Zerspanungswerkzeug mit einer eine Verzahnung aufweisenden Ausnehmung zur Aufnahme der Schneidplatte ist in der US 2,779,992 beschrieben.

Keine dieser Lösungen ermöglicht jedoch einen auch bei hohen Schnittkräften sicheren Halt der Schneidplatte innerhalb der Ausnehmung.

Ein Zerspanungswerkzeug gemäß dem Oberbegriff von Anspruch 9 ist aus der DE 40 22 966 A1 bekannt.

Die DE 697 15 462 T2 beschreibt einen Schneideinsatz zur spanabhebenden Bearbeitung von Metallen.

Ein weiteres Zerspanungswerkzeug ist in der EP 1 666 179 A2 beschrieben. Zwar können mit dem dort beschriebenen Werkzeug insbesondere beim Ein- oder Abstechen von Werkstücken sehr gute Ergebnisse erzielt werden, allerdings ist es relativ aufwändig, die für den Zerspanungsvorgang sehr wichtige Höhe der Schneidplatte exakt einzustellen.

Es ist Aufgabe der vorliegenden Erfindung, ein Zerspanungswerkzeug mit einem Schneidplattenhalter und einer durch denselben gehaltenen Schneidplatte zu schaffen, welches einerseits einen sicheren Halt der Schneidplatte innerhalb der Ausnehmung des Schneidplattenhalters gewährleistet, welches andererseits jedoch auch bei hohen Schnittkräften nicht zum Brechen neigt.

Erfindungsgemäß wird diese Aufgabe durch die in Anspruch 1 genannten Merkmale gelöst.

Durch die erfindungsgemäße Ausführung des Schlitzes, insbesondere dessen an die Länge der Schneidplatte angepasste Länge, wird einerseits eine ausreichende Elastizität des zwischen dem Schlitz und der Ausnehmung verbleibenden Stegs erreicht, so dass dieser beim Einführen der Schneidplatte in die Ausnehmung elastisch nachgibt und wenn die Schneidplatte vollständig in die Ausnehmung eingesetzt ist, dieselbe mit einer sehr hohen Kraft festhält. Andererseits wird durch die Beschränkung der Länge des Schlitzes eine zu starke Schwächung des Schneidplattenhalters verhindert, so dass dieser auch bei hohen Schnittkräften, die durch den Schneidplattenhalter aufgenommen werden, stabil bleibt und die Schneidplatte in der gewünschten Position hält, so dass eine präzise und gleichmäßige Zerspanung möglich ist. Gegenüber der bekannten Lösung kann das erfindungsgemäße Zerspanungswerkzeug also höhere Schnittkräfte aufnehmen.

Dadurch, dass erfindungsgemäß ein sich zwischen der Ausnehmung und dem Schlitz befindlicher Steg des Schneidplattenhalters eine derartige Dicke aufweist, dass er elastisch verformbar ist, ergibt sich durch diese elastische Verformbarkeit des Stegs eine sehr gute Halterung der Schneidplatte in der Ausnehmung, da der Steg eine Haltekraft auf die Schneidplatte ausübt.

Um den Steg in Eingriff mit der Schneidplatte zu bringen und so die Haltekraft des Schneidplattenhalters auf die Schneidplatte erheblich zu erhöhen, ist erfindungsgemäß vorgesehen, dass die Schneidplatte an ihrem dem Schlitz zugewandten Randabschnitt eine Aussparung aufweist, die sich an einer zu dem Schlitz benachbarten Stelle befindet. Dadurch verformt sich der Steg zwischen der Ausnehmung und dem Schlitz derart, dass er in die Aussparung der Schneidplatte eingreift und diese hält.

Wenn in einer vorteilhaften Weiterbildung der Erfindung zwei einander gegenüberliegende Anlageflächen der Ausnehmung nicht parallel zueinander ausgerichtet sind, wobei die Höhe der Ausnehmung sich von der Öffnung der Ausnehmung ausgehend verringert, so wird eine Erhöhung der Vorspannung, mit der die Schneidplatte in der Ausnehmung des Schneidplattenhalters aufgenommen wird, erzielt und es ist dennoch ein leichtes Einführen der Schneidplatte in die Ausnehmung möglich.

Des weiteren kann vorgesehen sein, dass die beiden Anlageflächen einen Winkel von 1° - 4° zueinander aufweisen. Durch diese Maßnahme wird erreicht, dass die Schneidplatte zwar einfach in die Ausnehmung eingesetzt werden kann, dass aber insbesondere im hinteren Bereich der Ausnehmung, in der auch der Schlitz verläuft, eine bestimmte Vorspannung zum Halten der Schneidplatte erreicht wird.

Als besonders vorteilhaft hinsichtlich einer solchen Vorspannung für die Schneidplatte hat es sich erwiesen, wenn die Ausnehmung eine geringere Höhe als die Höhe der Schneidplatte aufweist, insbesondere wenn die Höhe der Ausnehmung an ihrer engsten Stelle 0,15 bis 0,25 mm geringer ist als die Höhe der Schneidplatte.

Um einen noch besseren Halt der Schneidplatte in der Ausnehmung erreichen zu können, kann in einer weiteren vorteilhaften Ausgestaltung der Erfindung vorgesehen sein, dass die Ausnehmung an einer ihrer Anlageflächen eine an eine Abschrägung der Schneidplatte angepasste Schrägfläche aufweist, deren Winkel 20 bis 50°, vorzugsweise 25 bis 40°, besonders bevorzugt ca. 30°, beträgt. Des weiteren trägt diese Lösung auch zu einer einfacheren Herstellbarkeit der Verzahnung der Schneidplatte bei, da die Schneidplatte dadurch sehr gut ausformbar ist, wenn sie beispielsweise durch Sintern hergestellt wird.

Hinsichtlich der Elastizität des Steges hat es sich als besonders vorteilhaft herausgestellt, wenn die Dicke des Steges das 0, 75- bis 1,5-fache der Höhe des Schlitzes beträgt.

Hinsichtlich eines guten Verhältnisses aus Elastizität des Steges einerseits und Stabilität des Schneidplattenhalters andererseits hat es sich als besonders vorteilhaft erwiesen, wenn das Verhältnis zwischen der Höhe des Schlitzes und der Länge des Schlitzes 1:2 bis 1:4 beträgt, insbesondere wenn der Schlitz eine Höhe von 1,5 - 3,0 mm und eine Länge von 5 - 8 mm aufweist.

In einer weiteren vorteilhaften Ausgestaltung der Erfindung kann eine Einstelleinrichtung zum Einstellen der Lage des Schneidplattenhalters zu einem Grundhalter vorgesehen sein, wobei die Einstelleinrichtung eine sich an dem Schneidplattenhalter befindliche Schrägfläche und eine in den Grundhalter einschraubbare Stellschraube aufweist, welche eine mit der Schrägfläche des Schneidplattenhalters korrespondierende Schrägfläche aufweist, wobei die beiden Schrägflächen relativ zueinander derart angeordnet sind, dass eine Drehung der Stellschraube eine Drehung des Schneidplattenhalters verursacht.

Eine solche Einstelleinrichtung, bei der die Schrägflächen der Schraube einerseits und des Schneidplattenhalters andererseits miteinander korrespondieren, ermöglicht die exakte Verstellung des Schneidplattenhalters durch eine entsprechende Positionierung der Stellschraube. Wenn also die Stellschraube verdreht wird, so bewegt sich dadurch der Schneidplattenhalter gegenüber dem Grundhalter und somit auch die in der Ausnehmung des Schneidplattenhalters aufgenommene Schneidplatte.

Des weiteren ist es Aufgabe der vorliegenden Erfindung, ein Zerspanungswerkzeug mit einem Grundhalter und einem an dem Grundhalter angebrachten Schneidplattenhalter zu schaffen, bei dem die Höhe der Schneidplatte möglichst einfach eingestellt werden kann.

Erfindungsgemäß wird diese Aufgabe durch die in Anspruch 9 genannten Merkmale gelöst.

Die erfindungsgemäße Einstelleinrichtung, bei der die Schrägflächen der Schraube einerseits und des Schneidplattenhalters andererseits miteinander korrespondieren, ermöglicht die exakte Verstellung des Schneidplattenhalters durch eine entsprechende Positionierung der Stellschraube. Wenn also die Stellschraube verdreht wird, so bewegt sich dadurch der Schneidplattenhalter gegenüber dem Grundhalter und somit auch die in der Ausnehmung des Schneidplattenhalters aufgenommene Schneidplatte.

Erfindungsgemäß ergibt sich also eine sehr einfache und damit auch für weniger gut geübte Bediener gut nutzbare Möglichkeit zur Einstellung der Höhe bzw. der Position der Schneidplatte.

Eine besonders gute Anlage der beiden Schrägflächen und eine damit verbundene präzise Verstellmöglichkeit für den Schneidplattenhalter ist gewährleistet, wenn in einer vorteilhaften Weiterbildung der Erfindung die Schrägflächen der Stellschraube und des Schneidplattenhalters als Kegelstumpfmantelflächen ausgebildet sind.

Eine sichere Fixierung der Stellschraube verbunden mit einer einfachen Kopplung des Schneidplattenhalters mit dem Grundhalter ergibt sich, wenn die Stellschraube in eine Gewindebohrung des Grundhalters eingeschraubt ist.

Um eine sehr exakte Führung der Stellschraube in dem Grundhalter und damit eine entsprechend genaue Einstellung der Höhe der Schneidplatte zu erreichen, kann des weiteren vorgesehen sein, dass die Stellschraube eine mit einer Bohrung des Grundhalters korrespondierende zylindrische Passfläche aufweist. Dadurch wird auch die Stabilität der Einstelleinrichtung erhöht.

Wenn des weiteren vorgesehen ist, dass die Stellschraube mittels einer Fixierschraube in ihrer Position fixierbar ist, so wird eine unerwünschte Verstellung des auf die gewünschte Höhe eingestellten Schneidplattenhalters gewährleistet und es werden Vibrationen auf effektive Art und Weise verhindert. Mittels dieser Fixierschraube kann dadurch eine besonders hohe Kraft aufgebracht werden, dass die Stellschraube eine Freidrehung zur Anlage der Fixierschraube aufweist.

Um mit einem erfindungsgemäßen Zerspanungswerkzeug mehrere Schnitte vornehmen zu können, kann in einer weiteren vorteilhaften Ausgestaltung der Erfindung vorgesehen sein, dass an dem Grundhalter mehrere parallel zueinander angeordnete Schneidplattenhalter angebracht sind.

In einer weiteren vorteilhaften Ausgestaltung der Erfindung kann vorgesehen sein, dass der Schneidplattenhalter eine von der Ausnehmung beabstandeten, geschlossenen Schlitz aufweist, welcher an derjenigen Seite der Ausnehmung angeordnet ist, an der bei bestimmungsgemäßer Verwendung des Zerspanungswerkzeugs die höchste Schnittkraft auftritt, und dass der Schlitz sich an der der Öffnung der Ausnehmung entgegengesetzten Seite nicht über die Längserstreckung der Schneidplatte hinaus erstreckt.

Durch diese Ausführung des Schlitzes, insbesondere dessen an die Länge der Schneidplatte angepasste Länge, wird einerseits eine ausreichende Elastizität des zwischen dem Schlitz und der Ausnehmung verbleibenden Stegs erreicht, so dass dieser beim Einführen der Schneidplatte in die Ausnehmung elastisch nachgibt und wenn die Schneidplatte vollständig in die Ausnehmung eingesetzt ist, dieselbe mit einer sehr hohen Kraft festhält. Andererseits wird durch die Beschränkung der Länge des Schlitzes eine zu starke Schwächung des Schneidplattenhalters verhindert, so dass dieser auch bei hohen Schnittkräften, die durch den Schneidplattenhalter aufgenommen werden, stabil bleibt und die Schneidplatte in der gewünschten Position hält, so dass eine präzise und gleichmäßige Zerspanung möglich ist. Gegenüber der bekannten Lösung kann das erfindungsgemäße Zerspanungswerkzeug also höhere Schnittkräfte aufnehmen.

Weitere vorteilhafte Ausgestaltungen und Weiterbildungen ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine Seitenansicht eines erfindungsgemäßen Zerspanungswerkzeugs;
- Fig. 2: eine Seitenansicht einer bei dem erfindungsgemäßen Zerspanungswerkzeug eingesetzten Schneidplatte in einer vergrößerten Darstellung;
- Fig. 3: einen Schnitt nach der Linie III-III aus Fig. 2 mit einem Teil des Schneidplattenhalters;
- Fig. 4: eine Vorderansicht der Schneidplatte gemäß dem Pfeil IV aus Fig. 2;
- Fig. 5: eine Draufsicht auf die Schneidplatte gemäß dem Pfeil V aus Fig. 2;
- Fig. 6: eine perspektivische Darstellung des Schneidplattenhalters des erfindungsgemäßen Zerspanungswerkzeugs;
- Fig. 7: eine vergrößerte Darstellung der Ausnehmung des Schneidplattenhalters;
- Fig. 8: eine perspektivische Ansicht des erfindungsgemäßen Zerspanungswerkzeugs;
- Fig. 9: einen Schnitt nach der Linie IX-IX aus Fig. 1;
- Fig. 10: eine Seitenansicht des erfindungsgemäßen Zerspanungswerkzeugs gemäß dem Pfeil X aus Fig. 1; und
- Fig. 11: eine vergrößerte Darstellung einer bei dem erfindungsgemäßen Zerspanungswerkzeug eingesetzten Stellschraube.

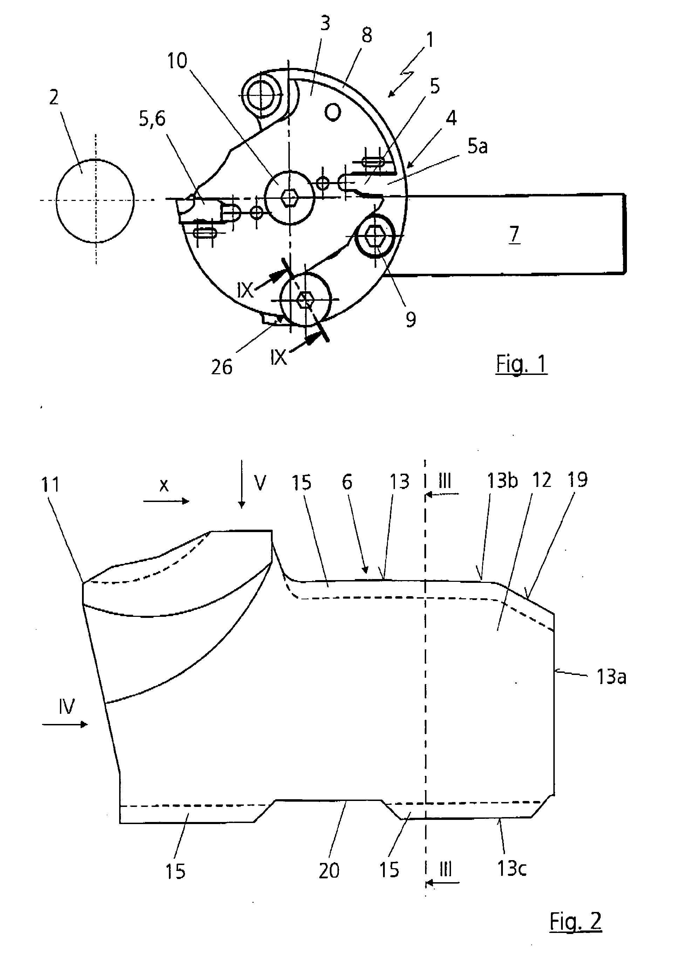

Fig. 1 zeigt ein Zerspanungswerkzeug 1, welches im vorliegenden Fall zum Ein- oder Abstechen eines rotierenden Werkstücks 2 dient. Das Zerspanungswerkzeug 1 weist einen Schneidplattenhalter 3 auf, der an einem Grundhalter 4 des Zerspanungswerkzeugs 1 angebracht ist. Der Schneidplattenhalter 3 ist im vorliegenden Fall im wesentlichen punktsymmetrisch ausgebildet und mit zwei Ausnehmungen 5 versehen, von denen in einer eine Schneidplatte 6 angeordnet ist, mit der die eigentliche Zerspanung des Werkstücks 2 vorgenommen wird. Zum Einführen der Schneidplatte 6 ist sind die Ausnehmungen 5 jeweils mit einer Öffnung 5a versehen.

Statt als Ein- oder Abstechdrehmeißel könnte das Zerspanungswerkzeug 1 auch in Form eines rotierenden Werkzeugs, also beispielsweise als Scheibenfräser oder Kreissäge, ausgebildet sein. Insbesondere bei der Ausführungsform des Zerspanungswerkzeugs 1 als Kreissäge oder als Scheibenfräser ist ein guter Sitz der Schneidplatte 6 in dem Schneidplattenhalter 3 wichtig, da auf die Schneidplatte 6 in diesem Fall teilweise sehr hohe Fliehkräfte wirken.

Der Grundhalter 4 ist im vorliegenden Fall zweiteilig ausgeführt und weist einen im Querschnitt vorzugsweise rechteckig ausgeführten stangenförmigen Abschnitt 7, der in einer nicht dargestellten Haltevorrichtung aufgenommen wird, und einen teilkreisförmigen Abschnitt 8 auf, der mit dem stangenförmigen Abschnitt 7 mittels einer oder mehrerer Schrauben verbunden ist, von denen eine Schraube 9 dargestellt ist. Die Verbindung des Schneidplattenhalters 3 mit dem Grundhalter 4 erfolgt durch eine zentrale Fixierschraube 10, die den Schneidplattenhalter 3 im vorliegenden Fall mit dem teilkreisförmigen Abschnitt 8 des Grundhalters 4 verbindet.

In Fig. 2 ist die Schneidplatte 6 in einer vergrößerten Seitenansicht dargestellt. Dabei ist erkennbar, dass die Schneidplatte 6 eine Schneide 11 aufweist, die bei der Bearbeitung des Werkstücks 2 mit demselben in Kontakt steht. Des weiteren weist die Schneidplatte 6 einen von der Schneide 11 abgewandten Abschnitt 12 auf, der innerhalb der Ausnehmung 5 des Schneidplattenhalters 3 angeordnet ist. Der Rand 13 des Abschnitts 12 steht also mit dem Rand 14 der Ausnehmung 5 in Kontakt. Dabei weist der Rand 13 des der Schneide 11 abgewandten Abschnitts 13 drei Randabschnitte 13a, 13b und 13c auf, von denen der erste Randabschnitt 13a gegenüberliegend zu der Schneide 11 angeordnet ist und damit als hinterer Randabschnitt 13a bezeichnet werden kann. Der zweite Randabschnitt 13b ist an einer Oberseite des Abschnitts 12 angeordnet und wird daher im folgenden als oberer Randabschnitt 13b bezeichnet, wohingegen der dritte Randabschnitt 13c an einer Unterseite des Abschnitts 12 angeordnet ist und daher als unterer Randabschnitt 13c bezeichnet wird.

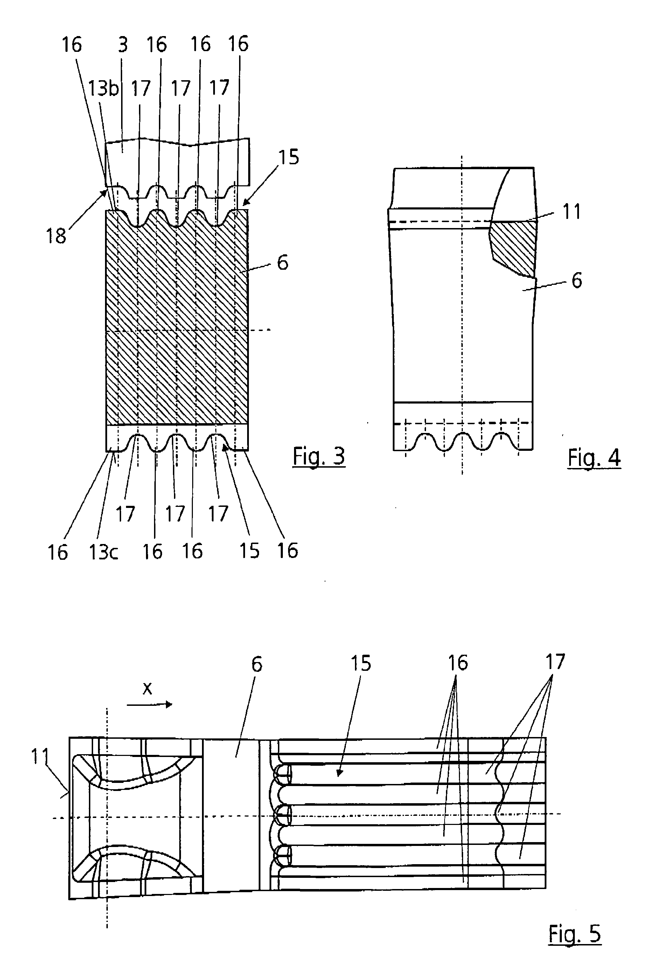

Wie in dem Schnitt gemäß Fig. 3 erkennbar ist, weisen sowohl der obere Randabschnitt 13b als auch der untere Randabschnitt 13c jeweilige Verzahnungen 15 auf, die aus sich abwechselnden Erhebungen 16 und Vertiefungen 17 bestehen. Allgemein ist der mit dem Rand 14 der Ausnehmung 5 in Kontakt stehende Abschnitt 12 der Schneidplatte 3 zumindest über einen Teil seines Randes 13 mit wenigstens einer Verzahnung 15 versehen. Dabei ist die Längserstreckung der sich abwechselnden Erhebungen 16 und Vertiefungen 17 derart, dass diese in der mit "X" bezeichneten Einschieberichtung der Schneidplatte 6 in die Ausnehmung 5 des Schneidplattenhalters 3 verlaufen. Dies ist in der Draufsicht gemäß Fig. 5 besonders gut zu erkennen. Durch die Verzahnungen 15 ist die Schneidplatte 6 erheblich besser innerhalb des Schneidplattenhalters 3, der, wie wiederum in Fig. 3 erkennbar ist, mit ähnlichen Verzahnungen 18 versehen ist geführt und stabiler gehalten. In der Vorderansicht gemäß Fig. 4 ist lediglich die Verzahnung 15 des unteren Randabschnitts 13c zu erkennen.

Durch die verbesserte Halterung der Schneidplatte 6 in der Ausnehmung 5 des Schneidplattenhalters 3 wird ein Verkippen der Schneidplatte 6 verhindert, was bei der Bearbeitung des Werkstücks 2 zu einer höheren Maßhaltigkeit und einer besseren Oberflächenqualität führt.

Im vorliegenden Fall sind die Erhebungen 16 und die Vertiefungen 17 der Verzahnungen 15 jeweils abgerundet und bilden somit ein wellenförmiges Profil der Verzahnungen 15. Gleiches gilt auch für die Verzahnungen 18 des Schneidplattenhalters 3, wobei hier die Erhebungen 16 abgeflacht sind. Selbstverständlich wären auch andere Profile bzw. Querschnitte der Verzahnungen 15 und 18 denkbar, wobei die abgerundete Form jedoch besonders einfach hergestellt werden kann. Die Anzahl der Erhebungen 16 und Vertiefungen 17 der Verzahnungen 15 und 18 hängt insbesondere von der Breite der Schneidplatte 6 ab und kann daher von der dargestellten Anzahl unterschiedlich sein.

Wie wiederum in Fig. 2 erkennbar ist, ist der Abschnitt 12 der Schneidplatte 6 auf der der Schneide 11 gegenüberliegenden Seite mit einer Abschrägung 19 versehen, die sich zwischen dem hinteren Randabschnitt 13a und dem oberen Randabschnitt 8b befindet. Die Abschrägung 19, über welche ebenfalls die Verzahnung 15 verläuft, gibt der Schneidplatte 6 eine zusätzliche Stabilität innerhalb der Ausnehmung 5 des Schneidplattenhalters 3.

Eine weitere Erhöhung der Stabilität wird durch eine Aussparung 20 erreicht, die sich in dem unteren Randabschnitt 13c befindet und somit die Verzahnung 15 in diesem Bereich in zwei Abschnitte teilt. Diese Aussparung 20 stellt sicher, dass die Schneidplatte 6 an ihrem unteren Randabschnitt 13c an zwei Flächen gegenüber dem Schneidplattenhalter 3 aufliegt, und verhindert so ein Kippen der Schneidplatte 6 innerhalb der Ausnehmung 5 des Schneidplattenhalters 3.

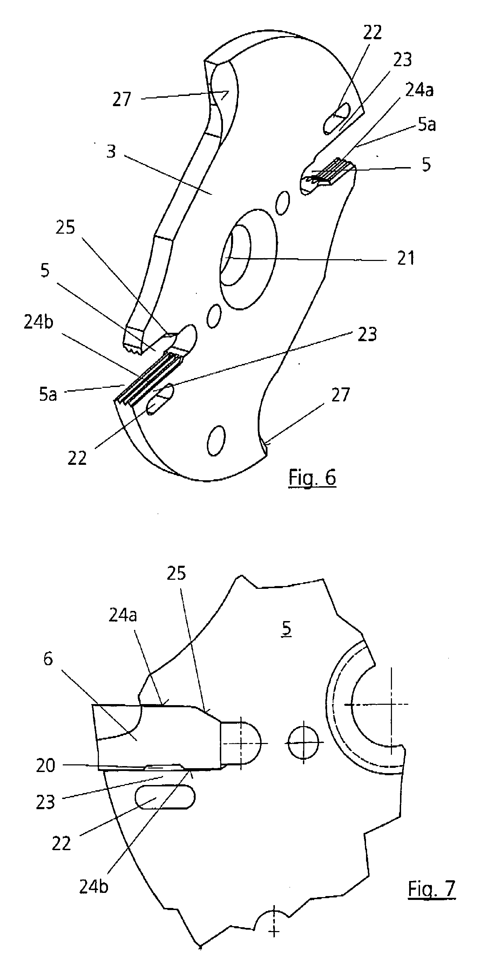

In der perspektivischen Ansicht von Fig. 6 ist der Schneidplattenhalter 3 dargestellt und es sind die Verzahnungen 18 der Ausnehmung 5 zur Aufnahme der Schneidplatte 6 deutlicher zu erkennen. Des weiteren ist in Fig. 6 eine zentrale Bohrung 21 dargestellt, durch welche die zentrale Fixierschraube 10 zur Anbringung des Schneidplattenhalters 3 an dem Grundhalter 4 verläuft.

In der vergrößerten Darstellung eines Teils des Schneidplattenhalters 3 gemäß Fig. 7 ist zu erkennen, dass der Schneidplattenhalter 3 einen von der Ausnehmung 5 beabstandeten, geschlossenen Schlitz 22 aufweist, welcher an derjenigen Seite der Ausnehmung 5 angeordnet ist, an der bei bestimmungsgemäßer Verwendung des Zerspanungswerkzeugs 1 die höchste Schnittkraft auftritt. Zwar ist die Schneidplatte 6 bei der Darstellung gemäß Fig. 7 nur mittels einer gestrichelten Linie angedeutet, dem Fachmann ist jedoch ohne weiteres klar, dass es sich dabei um die der Schneide 11 der Schneidplatte 6 gegenüberliegende Seite handelt. Aus Fig. 7 in Zusammenschau mit Fig. 1 wird deutlich, dass der Schlitz 22 sich an der der Öffnung 5a der Ausnehmung 5 entgegengesetzten Seite, also an der Seite, an der die Ausnehmung 5 geschlossen ist, nicht über die Längserstreckung der Schneidplatte 6 hinaus erstreckt. Dadurch wird eine zu starke Schwächung des Schneidplattenhalters 3 verhindert, so dass dieser auch bei hohen Schnittkräften stabil bleibt.

Zwischen der Ausnehmung 5 und dem Schlitz 22 befindet sich ein Steg 23, der eine derartige Dicke aufweist, dass er elastisch verformbar ist. Die Elastizität des Steges 23 sollte einerseits derart gering sein, dass die Kraft zum Einführen der Schneidplatte 6 in die Ausnehmung 5 nicht zu groß wird, und andererseits derart groß, dass eine ausreichende Haltekraft auf die Schneidplatte 6 ausgeübt wird.

Die bevorzugte Höhe des Schlitzes 22 beträgt 1,5 bis 3,0 mm, die bevorzugte Länge desselben beträgt 5 bis 8 mm. Ein zu bevorzugendes Verhältnis zwischen der Höhe und der Länge des Schlitzes 22 beträgt 1:2 bis 1:4.

Die Dicke des Steges 23, also der Abstand zwischen der Oberkante des Schlitzes 22 und dem unteren Randabschnitt 13c der Ausnehmung 5, beträgt, bis zum unteren Punkt der Vertiefungen 17 gemessen, im vorliegenden Fall das 0,5- bis 1,5-fache der Höhe des Schlitzes 22. Die Dicke des Steges 23 hängt jedoch auch von der Größe der Schneidplatte 6 ab, da beim Einführen einer größeren Schneidplatte 6 in die Ausnehmung 5 eine stärkere Verformung des Steges 23 auftritt. Beim Einführen der Schneidplatte 6 in die Ausnehmung 5 des Schneidplattenhalters 3 verformt sich durch die Verformung des Steges 23 auch der Schlitz 22.

Des weiteren ist in Fig. 7 zu erkennen, dass die Aussparung 20 an dem dem Schlitz 22 zugewandten Randabschnitt 13c sich an einer zu dem Schlitz 22 benachbarten Stelle befindet, wodurch der sich elastisch verformende Steg 23 in diese Aussparung eingreifen und somit die Schneidplatte 6 fest in der Ausnehmung 5 halten kann.

Des weiteren geht aus Fig. 7 hervor, dass zwei einander gegenüberliegende Anlageflächen 24a und 24b der Ausnehmung 5 des Schneidplattenhalters 3 nicht parallel zueinander ausgerichtet sind. Hierbei verringert sich die Höhe der Ausnehmung 5 von der Öffnung 5a der Ausnehmung 5 ausgehend insbesondere derart, dass die beiden Anlagenflächen 24a und 24b einen Winkel von 1° bis 4° zueinander aufweisen. Besonders zu bevorzugen ist es in diesem Zusammenhang, wenn die untere Anlagefläche 24b gerade ausgerichtet ist und die obere Anlagefläche 24a in einem Winkel zu dieser geraden Anlagefläche 24b ausgerichtet ist, insbesondere in einem Winkel von 2°.

Um einen besseren Halt der Schneidplatte 6 in der Ausnehmung 5 zu erzielen, weist des weiteren die Ausnehmung 5 eine geringere Höhe als die Höhe der Schneidplatte 6 auf. Beispielsweise kann die Höhe der Ausnehmung 5 an ihrer engsten Stelle, also an ihrer der Öffnung 5a abgewandten Stelle, 0,15 bis 0,25 mm geringer sein als die Höhe der Schneidplatte 6.

Die obere Anlagefläche 24a weist eine an die oben erwähnte Abschrägung 19 der Schneidplatte 6 angepasste Schrägfläche 25 auf, deren Winkel 20° bis 50°, vorzugsweise 25° bis 40° und besonders bevorzugt ca. 30° beträgt. Ein solcher Winkel der Schrägfläche 25 hat sich als guter Kompromiss zwischen einem guten Halt der Schneidplatte 6 in der Ausnehmung 5 und einer guten Herstellbarkeit der Schneidplatte 6 herausgestellt, insbesondere was die Herstellung der Verzahnungen 15 derselben betrifft.

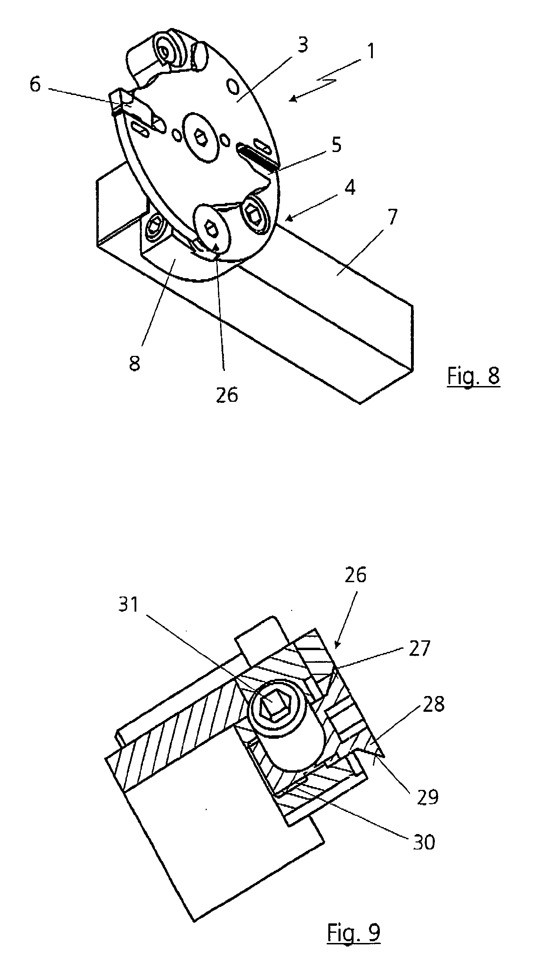

Fig. 8 zeigt das gesamte Zerspanungswerkzeug 1 in einer perspektivischen Ansicht von unten. Hierbei ist neben den bereits oben beschriebenen Details des Zerspanungswerkzeugs 1 eine Einstelleinrichtung 26 erkennbar, mit welcher wie nachfolgend näher beschrieben die Lage des Schneidplattenhalters 3 zu dem Grundhalter 4 verändert werden kann.

Die in Fig. 9 in einer vergrößerten Schnittansicht dargestellte Einstelleinrichtung 26 weist eine sich an dem Schneidplattenhalter 3 befindliche Schrägfläche 27 und eine in den Grundhalter 4 einschraubbare Stellschraube 28 auf, welche eine mit der Schrägfläche 27 des Schneidplattenhalters 3 korrespondierende Schrägfläche 29 aufweist.

Während die Schrägfläche 27 des Schneidplattenhalters 3 in Fig. 8 gut zu erkennen ist, geht die Schrägfläche 29 der in eine Gewindebohrung 30 des Grundhalters 4 eingeschraubten Stellschraube 28 am besten aus der Schnittdarstellung gemäß Fig. 9 hervor. Hierbei ist erkennbar, dass der Schneidplattenhalter 3 nicht nur zwei Ausnehmungen 5, sondern auch zwei Schrägflächen 27 aufweist. Die beiden Schrägflächen 27 und 29 sind relativ zueinander derart angeordnet, dass eine Drehung der Stellschraube 28 eine Drehung des Schneidplattenhalters 3 verursacht, da die Stellschraube bei ihrer Rotation an der Schrägfläche 27 des Schneidplattenhalters 3 entlang gleitet und diesen dadurch bewegt. Eine Drehung des Schneidplattenhalters 3 wiederum führt zu einer Verstellung der Höhe bzw. Position der in der Ausnehmung 5 des Schneidplattenhalters 3 angeordneten Schneidplatte 6. Dadurch kann die Schneidplatte 6 relativ zu der Spitzenhöhe des Werkstücks 2 eingestellt werden. Durch Verdrehen der Stellschraube 28 innerhalb ihrer Gewindebohrung 30 kann also die Höhe der Schneidplatte 6 eingestellt werden.

Wie aus Fig. 9 hervorgeht, sind die Schrägflächen 27 und 29 der Stellschraube 28 und des Schneidplattenhalters 3 im vorliegenden Fall jeweils als Mantelflächen eines Kegelstumpfs ausgebildet und weisen vorzugsweise einen Winkel von ca. 45° auf.

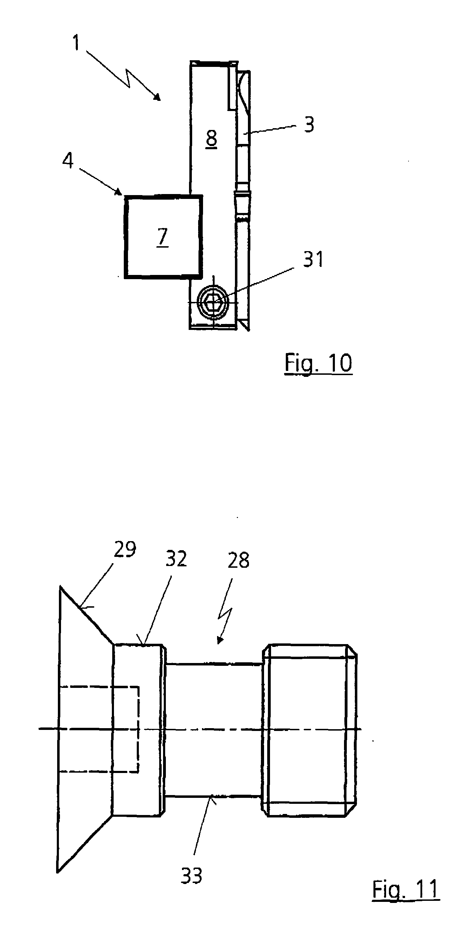

Die Fixierung der Stellschraube 28 in ihrer eingestellten Position erfolgt mittels einer Fixierschraube 31, die sich in dem teilkreisförmigen Abschnitt 8 des Grundhalters 4 befindet und, wie insbesondere Fig. 8 zu entnehmen ist, im rechten Winkel zu der Stellschraube 28 verläuft. Neben der Gewindebohrung 30 weist der Grundhalter 4 außerdem eine Bohrung auf, in der die Stellschraube 28 mit einer zylindrischen Passfläche 32 exakt geführt ist. Die zylindrische Passfläche 32 der Stellschraube 28 ist in der vergrößerten Darstellung der Stellschraube 28 gemäß Fig. 11 besser zu erkennen. Aus dieser Figur geht auch hervor, dass die Stellschraube 28 eine Freidrehung 33 aufweist, die zur Anlage der Fixierschraube 31 dient, so dass eine Beschädigung des in die Gewindebohrung 30 eingeschraubten Außengewindes der Stellschraube 28 verhindert wird.

In einer nicht dargestellten Ausführungsform kann vorgesehen sein, dass an dem Grundhalter 4 mehrere, insbesondere zwei, parallel zueinander angeordnete Schneidplattenhalter 4 mit entsprechenden Schneidplatten 6 angebracht sind. Dadurch kann eine entsprechende Anzahl an Schnitten gleichzeitig in das Werkstück 2 eingebracht werden. Wenn zwei der Schneidplattenhalter 3 an dem Grundhalter 4 angebracht sind, so kann sich die zentrale Fixierschraube 10 durch beide Schneidplattenhalter 3 sowie den Grundhalter 4 hindurch erstrecken und mit einer auf geeignete Art und Weise ausgeformten Mutter verbunden werden.

## Patentansprüche

1. Zerspanungswerkzeug (1) mit wenigstens einer Schneidplatte (6) und mit wenigstens einem Schneidplattenhalter (3), welcher wenigstens eine Ausnehmung (5) zur Aufnahme der Schneidplatte (6) aufweist, wobei jeweilige zur Anlage von Randabschnitten (13a,13b,13c) der Schneidplatte (6) vorgesehene Anlageflächen (24a,24b) der Ausnehmung (5) zumindest teilweise mit einer sich abwechselnde Erhebungen (16) und Vertiefungen (17) aufweisenden Verzahnung (15) versehen sind, wobei die Ausnehmung (5) eine Öffnung (5a) zum Einführen der Schneidplatte (6) in die Ausnehmung (5) aufweist, und wobei der Schneidplattenhalter (3) einen von der Ausnehmung (5) beabstandeten, geschlossenen Schlitz (22) aufweist, welcher an derjenigen Seite der Ausnehmung (5) angeordnet ist, an der bei bestimmungsgemäßer Verwendung des Zerspanungswerkzeugs (1) die höchste Schnittkraft auftritt,
**dadurch gekennzeichnet, dass**
der Schlitz (22) sich an der der Öffnung (5a) der Ausnehmung (5) entgegengesetzten Seite nicht über die Längserstreckung der Schneidplatte (6) hinaus erstreckt, dass ein sich zwischen der Ausnehmung (5) und dem Schlitz (22) befindlicher Steg (23) des Schneidplattenhalters (3) eine derartige Dicke aufweist, dass er elastisch verformbar ist, und dass die Schneidplatte (6) an ihrem dem Schlitz (22) zugewandten Randabschnitt (13c) eine Aussparung (20) aufweist, die sich an einer zu dem Schlitz (22) benachbarten Stelle befindet.

2. Zerspanungswerkzeug nach Anspruch 1,
**dadurch gekennzeichnet, dass**
zwei einander gegenüberliegende Anlageflächen (24a,24b) der Ausnehmung (5) nicht parallel zueinander ausgerichtet sind, wobei die Höhe der Ausnehmung (5) sich von der Öffnung (5a) der Ausnehmung (5) ausgehend verringert.

3. Zerspanungswerkzeug nach Anspruch 2,
**dadurch gekennzeichnet dass**
die beiden Anlageflächen (24a,24b) einen Winkel von 1° bis 4° zueinander aufweisen.

4. Zerspanungswerkzeug nach Anspruch 1, 2 oder 3,
**dadurch gekennzeichnet , dass**
die Ausnehmung (5) eine geringere Höhe als die Höhe der Schneidplatte (6) aufweist, wobei die Höhe der Ausnehmung (5) an ihrer engsten Stelle 0,15 bis 0,25 mm geringer ist als die Höhe der Schneidplatte (6).

5. Zerspanungswerkzeug nach einem der Ansprüche 1 bis 4,
**dadurch gekennzeichnet, dass**
die Ausnehmung (5) an einer ihrer Anlageflächen (24a) eine an eine Abschrägung (19) der Schneidplatte (6) angepasste Schrägfläche (25) aufweist, deren Winkel 20 bis 50°, vorzugsweise 25 bis 40°, besonders bevorzugt ca. 30°, beträgt.

6. Zerspanungswerkzeug nach einem der Ansprüche 1 bis 5,
**dadurch gekennzeichnet, dass**
die Dicke des Steges (23) das 0,75- bis 1,5-fache der Höhe des Schlitzes (22) beträgt.

7. Zerspanungswerkzeug nach einem der Ansprüche 1 bis 6,
**dadurch gekennzeichnet, dass**
das Verhältnis zwischen der Höhe des Schlitzes (22) und der Länge des Schlitzes (22) 1:2 bis 1:4 beträgt, wobei der Schlitz (22) eine Höhe von 1,5 - 3,0 mm und eine Länge von 5 - 8 mm aufweist.

8. Zerspanungswerkzeug nach einem der Ansprüche 1 bis 7,
**gekennzeichnet durch**
eine Einstelleinrichtung (26) zum Einstellen der Lage des Schneidplattenhalters (3) zu einem Grundhalter (4), wobei die Einstelleinrichtung (26) eine sich an dem Schneidplattenhalter (3) befindliche Schrägfläche (27) und eine in den Grundhalter (4) einschraubbare Stellschraube (28) aufweist, welche eine mit der Schrägfläche (27) des Schneidplattenhalters (3) korrespondierende Schrägfläche (29) aufweist, wobei die beiden Schrägflächen (27,29) relativ zueinander derart angeordnet sind, dass eine Drehung der Stellschraube (28) eine Drehung des Schneidplattenhalters (3) verursacht.

9. Zerspanungswerkzeug (1) mit einem Grundhalter (4), an dem wenigstens ein Schneidplattenhalter (3) angebracht ist, welcher wenigstens eine Ausnehmung (5) zur Aufnahme einer Schneidplatte (6) aufweist, und mit einer Einstelleinrichtung (26) zum Einstellen der Lage des Schneidplattenhalters (3) zu dem Grundhalter (4), welche eine sich an dem Schneidplattenhalter (3) befindliche Schrägfläche (27) aufweist,
**dadurch gekennzeichnet, dass**
die Einstelleinrichtung (26) eine in den Grundhalter (4) einschraubbare Stellschraube (28) aufweist, welche eine mit der Schrägfläche (27) des Schneidplattenhalters (3) korrespondierende Schrägfläche (29) aufweist, wobei die beiden Schrägflächen (27,29) relativ zueinander derart angeordnet sind, dass eine Drehung der Stellschraube (28) eine Drehung des Schneidplattenhalters (3) verursacht.

10. Zerspanungswerkzeug nach Anspruch 9,
**dadurch gekennzeichnet, dass**
die Schrägflächen (27,29) der Stellschraube (28) und des Schneidplattenhalters (3) als Kegelstumpfmantelfläche ausgebildet sind.

11. Zerspanungswerkzeug nach Anspruch 9 oder 10,
**dadurch gekennzeichnet, dass**
die Stellschraube (28) in eine Gewindebohrung (30) des Grundhalters (4) eingeschraubt ist.

12. Zerspanungswerkzeug nach Anspruch 11,
**dadurch gekennzeichnet, dass**
die Stellschraube (28) eine mit einer Bohrung des Grundhalters (4) korrespondierende zylindrische Passfläche (32) aufweist.

13. Zerspanungswerkzeug nach einem der Ansprüche 9 bis 12,
**dadurch gekennzeichnet, dass**
die Stellschraube (28) mittels einer Fixierschraube (31) in ihrer Position fixierbar ist, und dass die Stellschraube (28) eine Freidrehung (33) zur Anlage der Fixierschraube (31) aufweist.

14. Zerspanungswerkzeug nach einem der Ansprüche 9 bis 13,
**dadurch gekennzeichnet, dass**
an dem Grundhalter (4) mehrere parallel zueinander angeordnete Schneidplattenhalter (3) angebracht sind.

15. Zerspanungswerkzeug nach einem der Ansprüche 9 bis 14,
**dadurch gekennzeichnet, dass**
der Schneidplattenhalter (3) eine von der Ausnehmung (5) beabstandeten, geschlossenen Schlitz (22) aufweist, welcher an derjenigen Seite der Ausnehmung (5) angeordnet ist, an der bei bestimmungsgemäßer Verwendung des Zerspanungswerkzeugs (1) die höchste Schnittkraft auftritt, und dass der Schlitz (22) sich an der der Öffnung (5a) der Ausnehmung (5) entgegengesetzten Seite nicht über die Längserstreckung der Schneidplatte (6) hinaus erstreckt.
